# FASCICULE DE BREVET EUROPEEN

(11) **EP 0 457 699 B1**
(45) Date de publication et mention de la délivrance du brevet: **02.08.1995**
(21) Numéro de dépôt: 91420157.9
(22) Date de dépôt: 15.05.1991
(51) Int. Cl.: B60R 22/18, B60R 22/26

(54) **Dispositif d'accrochage automatique au plancher d'un véhicule d'un moyen de fixation d'une ceinture de sécurité**
Vorrichtung zum automatischen Kuppeln einer Sicherheitsgurtverankerung mit dem Boden eines Fahrzeuges
Device for automatically coupling a safety belt anchorage to a vehicle floor

(30) Priorité: 16.05.1990 FR 9006341
(43) Date de publication de la demande: 21.11.1991
(73) Titulaire: CESA COMPAGNIE EUROPEENNE DE SIEGES POUR AUTOMOBILES, 92300 Levallois-Perret (FR)
(72) Inventeur: Colin, Jacques, F-45700 Montcresson (FR); Roman, Serge, F-45120 Chalette-sur-Loing (FR)
(74) Mandataire: Moncheny, Michel

(56) Documents cités:
- DE-A- 3 110 689
- DE-U- 7 703 850
- FR-A- 2 085 077
- FR-A- 2 566 347

## Description

Le dispositif suivant l'invention concerne la fixation des ceintures de sécurité utilisées dans les véhicules automobiles pour assurer le maintien des utilisateurs sur leurs sièges en cas de ralentissement brusque ou d'accident.

Le dispositif bien qu'il s'applique de façon générale à la fixation des ceintures de sécurité des sièges de véhicules concerne plus particulièrement les banquettes arrière de ceux-ci, le terme siège étant alors utilisé dans le sens de place de banquette équipée d'une ceinture de sécurité.

Les ceintures de sécurité sont fréquemment fixées d'un côté du siège à la paroi du véhicule et de l'autre à un moyen de fixation, proche de l'assise du siège et situé approximativement à la hauteur de la hanche de l'utilisateur. Ce moyen de fixation est en général relié au plancher du véhicule, afin de garantir, en cas d'accident, une tenue mécanique suffisante.

Dans le cas le plus fréquent où ces banquettes arrière comportent deux emplacements formant siège pour utilisateurs, un passage est ménagé entre ces deux sièges, à travers l'assise de cette banquette le plus souvent, pour relier chaque ceinture à son point de fixation au plancher.

Une telle disposition convient bien dans les cas où le siège est fixe. Par contre, lorsque ce siège est apte à être déplacé longitudinalement, la position relative du point de liaison du moyen de fixation au plancher se déplace et la position de la ceinture n'est plus satisfaisante. On peut prévoir plusieurs points de liaison au plancher de ce moyen de fixation de la ceinture, mais il faut alors déplacer cette liaison en fonction de la taille des utilisateurs.

On a recherché la possibilité de réaliser une liaison entre le plancher du véhicule et le moyen de fixation de la ceinture de sécurité, déplaçable, en fonction de l'emplacement de l'assise du siège sur l'axe longitudinal de réglage, de façon particulièrement aisée et rapide. On a recherché aussi la possibilité d'utiliser de tels dispositifs pour l'équipement des sièges arrière des véhicules. Dans le cas où ces sièges arrière font partie d'une banquette on a recherché la possibilité d'agir simultanément sur le déplacement de la banquette et la liaison au plancher des moyens de fixation de ces ceintures. On a recherché aussi non seulement la possibilité de permettre le coulissement longitudinal de l'assise de la banquette avec adaptation correspondante de la liaison au plancher des moyens de fixation des ceintures, mais encore la possibilité de basculer cette assise vers l'avant, en libérant de façon aussi complète que possible l'emplacement de celle-ci sur le plancher pour la mise en place des marchandises. Dans ce dernier cas, on a recherché aussi la possibilité d'un retour immédiat à l'état initial pour le transport de voyageurs convenablement maintenus par leurs ceintures de sécurité.

Un état de la technique selon le préambule de la revendication 1 est illustre par le document FR-A-2 085 077. Toutefois, on observera que la solution décrite par ce document s'applique à un siège dont il n'est pas prévu qu'il puisse basculer vers l'avant.

Le dispositif suivant l'invention permet d'atteindre ces résultats. Il permet de relier au plancher d'un véhicule automobile au moins un moyen de fixation d'une ceinture de sécurité utilisée pour un siège de ce véhicule. Ce moyen de fixation est situé latéralement à un niveau correspondant approximativement à la hauteur de la hanche d'un utilisateur de ce siège. Cette assise est apte à prendre, le long d'un axe longitudinal, une position fixe, choisie parmi plusieurs, par rapport au plancher du véhicule. Le moyen de fixation de la ceinture de sécurité est relié de façon flexible à un premier point d'une pièce majeure. La pièce majeure est liée directement ou indirectement à l'assise et est de forme telle qu'elle est capable de coopérer avec un moyen de retenue fixé au plancher du véhicule et de se verrouiller à ce moyen de retenue, un moyen de commande permettant d'agir directement ou indirectement sur la pièce majeure pour la libérer ou la verrouiller à ce moyen de retenue. A chaque position fixe longitudinale de l'assise correspond un moyen de retenue sur lequel vient se verrouiller la pièce majeure.

Suivant un premier mode de réalisation du dispositif suivant l'invention, la pièce majeure comporte un crochet, cette pièce majeure étant articulée en rotation à l'extrémité d'un bras, lui-même articulé en rotation par rapport à l'assise, les deux axes de ces articulations étant transversaux et un moyen de commande permettant de faire tourner le bras autour de son axe d'articulation relié à l'assise de façon que, lorsqu'on se propose de verrouiller la pièce majeure dans une position fixe, au moins un bord du crochet vienne au contact du moyen de retenue et coopère avec lui en provoquant une rotation de la pièce majeure qui assure l'accrochage de ce crochet sur le moyen de retenue, le bras étant maintenu par le moyen de commande et la pièce majeure apte à permettre au crochet de coopérer avec le moyen de retenue pour passer d'une position fixe de l'assise à une autre position fixe.

Dans le cas où deux ceintures de sécurité sont montées à deux emplacements formant sièges d'une banquette arrière les moyens de fixation de ces deux ceintures peuvent être reliés de façon flexible à une seule pièce majeure. Suivant un autre mode de réalisation les deux ceintures de sécurité peuvent être reliées de façon flexible chacune à une pièce majeure, les deux pièces majeures étant articulées en rotation à l'extrémité d'un bras de forme adaptée.

Le plus souvent les moyens de fixation des ceintures de sièges de banquette arrière sont reliés de façon flexible à la ou aux pièces majeures par un passage ménagé à travers l'assise de cette banquette arrière.

De préférence le moyen de retenue avec lequel coopère le crochet de la pièce majeure est placé à une distance de l'axe d'articulation du bras sur l'assise, inférieure à la distance radiale qui sépare l'articulation de la pièce majeure, à l'extrémité du bras, de l'articulation de celui-ci sur l'assise. La disposition de ce moyen de retenue permet, par la poussée qu'il exerce sur le bord supérieur d'entrée du crochet lorsque le bras s'abaisse, la rotation de la pièce majeure dans le sens permettant l'engagement de ce moyen de retenue dans le crochet.

De préférence également le point de liaison flexible du moyen de fixation de la ceinture sur la pièce majeure est situé à une distance de l'axe d'articulation du bras sur l'assise, lorsque la ceinture est en tension, inférieure à la distance radiale entre l'axe d'articulation de la pièce majeure à l'extrémité du bras et l'axe d'articulation de celui-ci sur l'assise, afin de maintenir la pièce de retenue engagée dans le crochet.

De préférence également, la zone d'entrée du crochet aménagée dans la pièce majeure en vue de la pénétration de la pièce de retenue, présente un bord inférieur contre lequel ce moyen de retenue, préalablement engagé dans le crochet, vient en appui, lorsqu'on exerce sur la pièce majeure, au moyen du bras une poussée de bas en haut. Le couple ainsi réalisé provoque la rotation de la pièce majeure dans un sens opposé à celui qui a permis l'engagement du moyen de retenue dans le crochet et permet donc de dégager ce moyen de retenue du crochet.

De préférence, un moyen de commande du bras est un levier, articulé autour d'un axe transversal lié à l'assise, dont une extrémité comporte un moyen de manoeuvre, au voisinage de l'avant de l'assise, l'autre extrémité étant reliée à un prolongement du bras au-delà de son axe d'articulation sur l'assise, de façon à provoquer l'engagement dans le crochet ou, au contraire, le dégagement, de la pièce de retenue faisant partie du moyen de retenue qui correspond à la position longitudinale fixe, choisie pour l'assise du siège ou des emplacements formant sièges d'une banquette arrière.

De préférence, le moyen de retenue est un barreau transversal. Dans le cas d'une banquette arrière munie de deux ceintures et de moyens de fixation reliés chacun à une pièce majeure, ces deux pièces majeures coopèrent avantageusement avec un seul moyen de retenue choisi parmi plusieurs pour une position longitudinale fixe de l'assise choisie également parmi plusieurs.

De façon avantageuse, le levier de commande du bras permet aussi d'effectuer le verrouillage ou le déverrouillage de l'assise du siège pour pouvoir déplacer celui-ci d'une position fixe à l'autre suivant un axe longitudinal.

Un deuxième mode de réalisation du dispositif suivant l'invention permet comme le premier de relier au plancher d'un véhicule automobile un moyen de fixation d'une ceinture de sécurité utilisée pour maintenir un utilisateur sur un siège du véhicule, moyen de fixation disposé latéralement par rapport à l'utilisateur, approximativement à la hauteur de la hanche.

Ce dispositif comme dans le premier cas s'applique à des sièges dont l'assise est apte à prendre le long d'un axe longitudinal une position fixe choisie parmi plusieurs par rapport au plancher du véhicule. A chacune de ces positions fixes de l'assise correspond un moyen de retenue sur lequel vient se verrouiller une pièce majeure qui est elle-même reliée de façon flexible au moyen de fixation de la ceinture de sécurité.

A la différence du premier mode de réalisation du dispositif le crochet de la pièce majeure est monté en rotation autour d'un axe fixe par rapport à l'assise, un moyen de commande permettant d'exercer un couple sur ce crochet afin de le faire coopérer avec un moyen de retenue pour assurer le verrouillage ou au contraire la libération de ce crochet et donc de la pièce majeure par rapport au moyen de retenue qui correspond à la position fixe choisie pour l'assise.

De préférence, un moyen de rappel élastique permet d'exercer sur le crochet un couple dans un sens opposé à celui exercé par le moyen de commande. Ainsi dans le cas où le moyen de commande permet de faire tourner le crochet dans un sens correspondant au déverrouillage c'est-à-dire à la libération du crochet par rapport au moyen de retenue, le moyen de rappel élastique permet au contraire le verrouillage lorsque cesse l'action exercée sur le moyen de commande.

De façon avantageuse le crochet est percé d'un trou carré dans lequel est engagé avec faible jeu un arbre de section carré dont les extrémités comportent des portées circulaires montées en rotation sur des paliers solidaires de l'assise. Le moyen de rappel élastique, de façon avantageuse également comporte un levier muni d'un trou carré, engagé également sur cet arbre, dont l'extrémité du bras de commande est reliée à un ressort qui exerce ainsi sur le crochet le couple de rappel élastique. De façon avantageuse également les paliers qui supportent l'arbre sur lequel est engagé le crochet sont solidaires d'un boîtier qui peut par exemple avoir une forme sensiblement parallélépipédique. Ce boîtier est solidaire de l'assise et comporte un point d'attache de l'extrémité du ressort éloignée de celle reliée au levier. Ce ressort peut être un ressort hélicoïdal. Avantageusement on utilise un double crochet et on dispose entre les deux crochets élémentaires le levier de rappel élastique.

Le moyen de commande du crochet de la pièce majeure est avantageusement un levier muni d'une poignée de commande. Ce levier actionne une tige qui vient en appui, direct ou indirect contre le crochet dans une zone située au voisinage d'une extrémité de celui-ci sensiblement opposée à celle qui comporte la zone d'accrochage avec le moyen de retenue.

La poussée exercée par cette tige est orientée de façon à soumettre le crochet à un couple en sens opposé à celui exercé par le moyen de rappel élastique. Il faut de plus que le moment de ce couple soit plus élevé.

En règle générale on exerce par le moyen de commande un couple de déverrouillage, le moyen de rappel élastique permettant de reverrouiller le crochet lorsque cesse l'action sur le moyen de commande.

De préférence on intercale entre la tige actionnée par le levier de commande un moyen de couplage afin d'appliquer la poussée exercée par la tige sur une zone déterminée de façon précise du crochet, zone qui se déplace au fur et à mesure de la rotation du crochet autour de l'arbre sur lequel il est monté.

De façon avantageuse le moyen de couplage est une pièce de révolution d'axe parallèle à celui du crochet dont les extrémités engagées dans des glissières guident le déplacement de la pièce de révolution au fur et à mesure du déplacement angulaire du crochet sous la poussée de la tige. Avantageusement les glissières sont réalisées dans les parois en regard du boîtier dans lequel le crochet est monté en rotation. De préférence la pièce de couplage a une forme de bobine dont les joues, de relativement fort diamètre par rapport aux extrémités de la partie axiale qui sont engagées dans les glissières, sont constituées par des rondelles qui sont en appui glissant contre les parois en regard du boîtier. On assure ainsi un déplacement de la pièce de couplage le long des glissières en maintenant son axe parallèle à celui du crochet.

De préférence, le moyen de commande qui assure le verrouillage ou la libération de la pièce majeure au moyen de son crochet par rapport à un moyen de retenue choisi parmi plusieurs solidaires du plancher du véhicule, permet de provoquer simultanément le verrouillage ou le déverrouillage des glissières, solidaires les unes de l'assise et les autres du plancher, qui sont aptes à coulisser les unes dans les autres ou au contraire à se bloquer les unes par rapport aux autres pour des positions fixes correspondant précisement aux emplacements pour lesquels le crochet est apte à coopérer avec un moyen de retenu.

Avantageusement les glissières inférieures de l'assise comportent à leur extrémité avant une articulation transversale qui permet de les faire basculer vers l'avant. Une telle disposition s'applique en particulier aux banquettes arrière de véhicules. Le basculement de ces glissières entraîne celui de l'assise et de la banquette. Le plus souvent au moins un moyen de liaison supplémentaire avec le plancher du véhicule empêche ces glissières inférieures de basculer. Aussi un moyen de désolidarisation permet de libérer les glissières inférieures pour permettre le basculement, par exemple d'une banquette arrière vers l'avant autour de son axe d'articulation après avoir déverrouillé au moins un crochet d'une pièce majeure d'avec un moyen de retenue. De préférence un moyen d'autoverrouillage permet de solidariser à nouveau les glissières inférieures avec le plancher du véhicule lorsqu'on rabat l'assise.

De préférence également au cours de ce rabattement de l'assise sur le plancher du véhicule un moyen d'autoverrouillage permet à la pièce majeure de venir s'accrocher automatiquement par au moins un crochet au moyen de retenue avec lequel il était en prise. Ce moyen d'autoverrouillage est avantageusement constitué par un profil particulier donné au bord extérieur d'au moins un crochet dans la zone où il entre en contact avec le moyen de retenue. De plus la distance entre l'axe d'articulation du crochet et le moyen de retenue en projection horizontale doit être suffisante pour que le moment du couple exercé par la poussée sensiblement verticale de l'assise atteigne une valeur suffisante pour provoquer l'ouverture, malgré la force de rappel du moyen élastique.

De préférence, comme dans le cas du premier mode de réalisation du dispositif suivant l'invention, le moyen de retenue est un barreau transversal de révolution.

De façon générale, le dispositif suivant l'invention permet, de façon particulièrement favorable, de relier au plancher d'un véhicule automobile au moins une ceinture de sécurité montée sur des emplacements formant siège d'une banquette arrière par l'intermédiaire d'au moins un moyen de fixation.

De préférence, à chaque ceinture de sécurité ainsi montée sur une banquette arrière correspond un moyen de fixation, relié de façon flexible à une pièce majeure par un passage ménagé à travers l'assise de la banquette, pièce majeure dont le crochet coopère avec un moyen de retenue fixé au plancher.

Le dispositif suivant l'invention s'applique en particulier aux banquettes arrière des véhicules automobiles. On peut alors munir les composants des glissières de l'assise d'une telle banquette arrière qui sont fixes par rapport au plancher du véhicule d un moyen de déverrouillage permettant de désolidariser de ce plancher l'ensemble de l'assise de la banquette avec ses glissières. Il est alors possible de faire tourner cette assise autour d'une articulation transversale disposée à l'avant de l'assise, dont les paliers sont solidaires de ce plancher, pour libérer l'emplacement. Dès le début de cette rotation, la partie arrière de cette assise s'élève de bas en haut en entraînant, dans le cas du premier mode de réalisation, le bras qui fait tourner la pièce majeure correspondante avec dégagement du moyen de retenue par rapport au crochet. Un retour ultérieur de l'assise à sa position initiale permet la rotation en sens inverse de la pièce majeure et l'engagement du moyen de retenue dans le crochet.

De façon avantageuse, également dans le cas du premier mode de réalisation, on peut prévoir des moyens élastiques et/ou de guidage pour participer à la rotation de la pièce majeure dans le sens correspondant au dégagement ou à l'engagement du moyen de retenue par rapport au crochet.

Les figures ci-après décrivent, de façon non limitative, deux modes particuliers de réalisation du dispositif suivant l'invention.

La figure 1 est une vue schématique de côté d'un premier mode de réalisation du dispositif suivant l'invention monté sur l'assise d'une banquette arrière de véhicule, le moyen de fixation de la ceinture étant relié au plancher du véhicule.

La figure 2 est une vue du dispositif de la figure 1, montrant le moyen de fixation de la ceinture libérée de sa liaison avec le plancher du véhicule.

La figure 3 est une vue de côté du dispositif des figures 1 et 2, montrant les moyens dont il dispose pour le rétablissement de la liaison entre le moyen de fixation de la ceinture et le plancher.

La figure 4 est une vue de côté du dispositif des figures 1 à 3, montrant les moyens dont il dispose pour relever l'assise en la faisant tourner autour d'un axe transversal placé à l'avant.

La figure 5 est une vue schématique de côté d'un deuxième mode de réalisation du dispositif suivant l' invention.

La figure 6 est une vue schématique de côté de la pièce majeure et du crochet dont elle est pourvue de la figure 5.

La figure 7 est une vue du crochet de dessus de la figure 6.

La figure 8 est une vue de droite de la figure 6.

La figure 9 est une vue du crochet de la figure 6 en condition d'autoverrouillage.

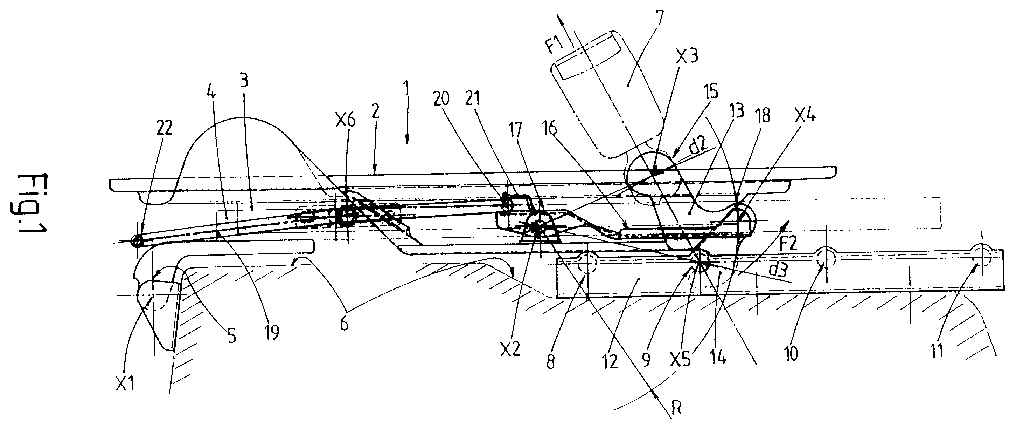

La figure 1 est une vue schématique du dispositif suivant l'invention monté sur l'assise 1 d'une banquette arrière de véhicule, assise 1 dont seule la structure métallique est représentée. Cette figure fait apparaître uniquement les moyens permettant de relier au plancher du véhicule l'une des ceintures de sécurité, non représentée de l'un des emplacements formant siège de la banquette. Cette assise 1 comporte une coque 2 en tôle emboutie à laquelle sont fixées des glissières supérieures telles que 3 qui coulissent sur des glissières inférieures telles que 4 ces dernières étant reliées par des articulations telles que 5, d'axe transversal X1, au plancher 6 du véhicule à l'avant de l'assise 1. Dans le cas du présent exemple, un moyen de liaison non représenté maintient ces glissières inférieures 4 au contact du plancher 6, moyen de liaison qui doit donc être détaché, par un moyen de commande également non représenté, pour permettre de faire basculer cette assise 1 vers l'avant en la faisant tourner autour de l'axe X1.

Des moyens de réglage partiellement représentés constitués par le levier de commande 19 et la poignée 22 et en soit connus permettent de choisir un point fixe parmi plusieurs non représentés, pour assurer le verrouillage de la position longitudinale de l'assise 1 par rapport au plancher 6. Ces mêmes moyens de réglage permettent le déverrouillage et à nouveau le verrouillage après choix d'un autre point fixe. A chacun de ces points fixes, correspond un moyen de retenue permettant de relier, de façon indirecte, le moyen de fixation 7 d'une ceinture de sécurité non représentée avec le plancher 6, sans modifier la position relative de ce moyen de fixation 7 par rapport à l'assise 1 et en le maintenant pratiquement au voisinage du prolongement transversal de la hanche d'un utilisateur. Comme le montre la figure 1, les moyens de retenue sont constitués par des barreaux transversaux de révolution 8, 9, 10, 11 disposés le long d'une échelle 12, d'axe longitudinal, fixée au plancher 6. Chacun de ces barreaux correspond à un point fixe de réglage longitudinal de l'assise 1 de la banquette arrière. Dans le cas de la figure 1, c'est le barreau 9 correspondant à la position longitudinale choisie pour l'assise 1 qui doit donc être utilisé comme moyen de retenue. Pour cela, le moyen de fixation 7 de la ceinture de sécurité est relié de façon flexible à la pièce majeure 13 munie du crochet 14,en un point X3. Un bras 16 est articulé en 17 autour de l'axe transversal X2 par rapport à l'assise 1. La pièce majeure 13 est articulée en 18 à l'extrémité arrière du bras 16 autour de l'axe transversal X4. Le barreau transversal 9 d'axe X5 est engagé dans le crochet 14 assurant ainsi le maintien du moyen de fixation 7 et donc de la ceinture de sécurité qui peut lui être attachée. Sur la figure 1, le moyen de fixation 7 est représenté incliné vers l'avant, d'un angle aigu par rapport à la verticale, dans le prolongement de la droite reliant dans le plan de la figure X5 à X3. Cette inclinaison de cette droite est approximativement celle donnée au moyen de fixation par la ceinture de sécurité lorsqu'elle est en tension et assure donc le maintien de l'engagement du barreau transversal 9 dans le crochet 14.

La forme de la pièce majeure 13 et de son crochet 14 ainsi que les emplacements du point de liaison X3 du moyen de fixation 7 et de l'axe d'articulation X4 de la pièce majeure sur le bras 16, ainsi que l'emplacement de l'axe X5 du barreau transversal 9, sont déterminés de façon telle que, lorsque ce barreau transversal 9 est engagé dans le crochet 14, le rayon R, de rotation de l'axe X4 autour de l'axe X2 d'articulation du bras 16 sur l'assise 1, est supérieur aux distances d2 et d3 qui séparent le point X3 et l'axe X5 du même axe X2. Il en résulte que, si une force de traction notable dans le sens de la flèche F1 n'est pas exercée par le moyen de fixation 7 sur X3, on peut provoquer le dégagement du barreau transversal 9 du crochet 14 en appliquant, au moyen du bras 16 une poussée de bas en haut sur la pièce majeure 13 au niveau de l'axe X4. La force de retenue, exercée de haut en bas par le barreau transversal 9 sur le bord d'entrée inférieur 14A du crochet 14, provoque une force d'entraînement en rotation de la pièce majeure dans le sens de la flèche F2, avec dégagement du barreau transversal 9 du crochet 14.

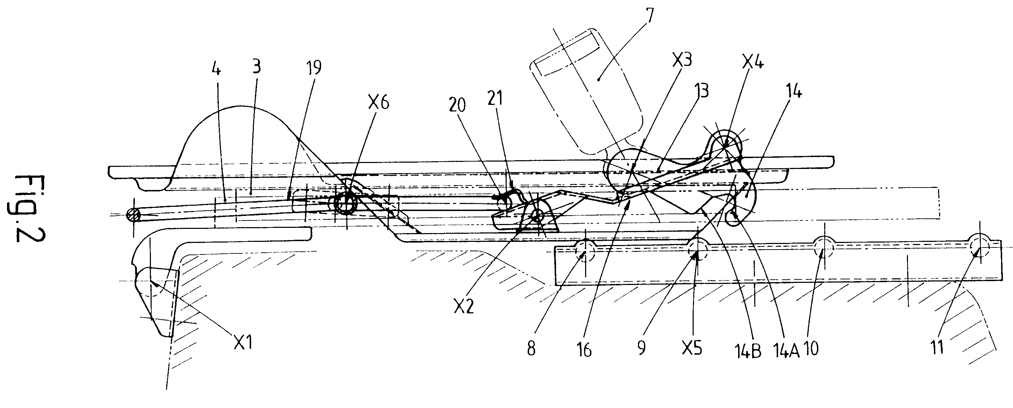

Le moyen de fixation 7 étant ainsi libéré de sa liaison avec le plancher 6 du véhicule, comme la montre la figure 2, on peut alors déplacer, par des moyens de réglage constitués par le levier de commande 19 et la poignée 22, si cela est nécessaire, l'assise 1 dans le sens longitudinal et choisir un nouveau point fixe adapté à la taille des utilisateurs.

On voit, figure 1, que le bras 16 est actionné par un levier de commande 19 monté sur un axe X6. La tête d'entraînement 20 de ce levier est engagée dans l'étrier 21 du bras 16. Une poussée de bas en haut, exercée sur la poignée de manoeuvre 22 de ce levier, provoque la levée du bras 16 et donc la libération du moyen de fixation 7 (voir figure 2).

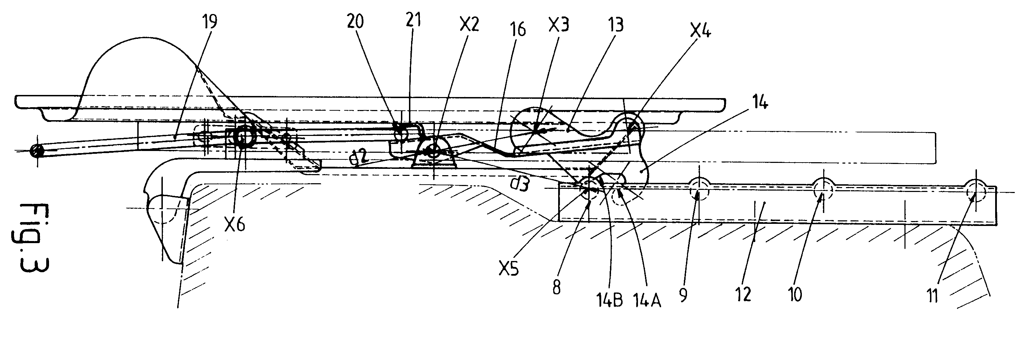

Après réglage de la position longitudinale de l'assise 1 et blocage de celle-ci à un nouveau point fixe, on peut alors engager dans le crochet 14 le moyen de retenue correspondant à ce nouveau point fixe, telle que le barreau transversal 8 (voir figure 3).

La poignée de commande 22 étant rappelée vers le bas par un moyen élastique, le bras 16 s'abaisse jusqu'à ce que, comme le montre la figure 3, le bord d'entrée supérieur 14B du crochet 14 vienne en appui contre le barreau transversal 8. Le rayon R étant supérieur à la distance d3 entre X5 et X2, l'effet de couple provoque la rotation de la pièce majeure 13 et le barreau transversal 8 s'engage à fond dans le crochet 14, de la même façon que le barreau transversal 9 dans le cas de la figure 1. On obtient ainsi une liaison efficace du moyen de fixation 7 au plancher 6 sans modification de sa position relative par rapport a l'assise.

On remarque que la distance entre la tête d'entraînement du levier 19 et l'axe X2 doit être déterminée en fonction de la poussée qui doit être exercée par le bras 16 sur la pièce majeure 13 au niveau de l'axe X4.

On voit dans cet exemple que le moyen de réglage de l'assise dans le sens longitudinal et le moyen d'actionnement du bras 16 sont constitués en partie par les mêmes organes, à savoir le levier de commande 19 et la poignée 22. Une telle conception n'est nullement obligatoire.

On remarque également qu'il y a intérêt à maintenir la pièce majeure 13 en position d'ouverture, entre le moment où la pièce de retenue est dégagée du crochet 14 et celui où elle s'y engage à nouveau. Pour cela, on peut munir la pièce majeure 13, de façon non représentée, d'un moyen de rappel élastique qui prend appui sur le bras 16 et tend à faire tourner cette pièce majeure autour de X4 dans le sens de la flèche F2. La pièce majeure 13 est ainsi maintenue en position d'ouverture lorsqu'un moyen de retenue n'est pas engagé dans le crochet 14.

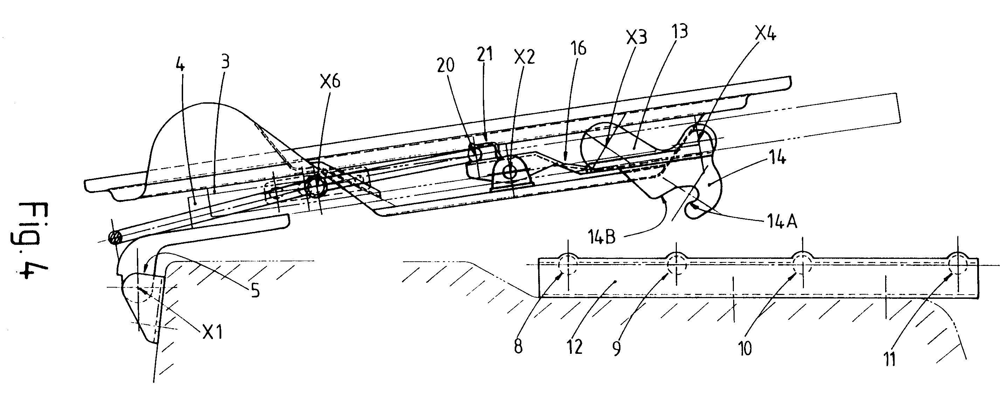

Comme le montre la figure 4 et comme cela a été dit plus haut, il est possible de désolidariser les glissières inférieures 4 de l'assise 1 d'avec le plancher 6 et de faire basculer cette assise autour d'un axe transversal X1 grâce à des articulations telles que 5. On constate qu'en faisant tourner la banquette arrière autour de l'axe X1 on entraîne le bras 16 qui ne tourne pas autour de X2 mais de X1, avec un résultat pratiquement identique, c'est-à-dire avec dégagement du moyen de retenue 9 d'avec le crochet 14 par rotation de la pièce majeure 13, ceci du fait de la forme de la partie inférieure 14A du crochet et de la disposition relative des différents axes de rotation (X4, X3). En sens inverse il est possible à nouveau de ramener l'assise à sa position initiale par rotation en sens inverse avec à nouveau engagement du moyen de retenue 9 dans le crochet 14, comme cela a été expliqué plus haut.

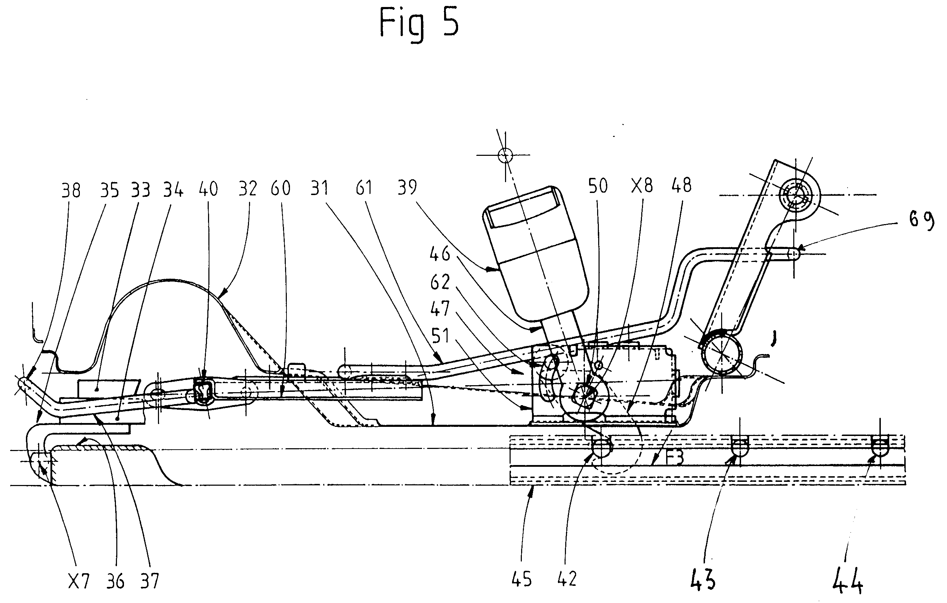

Les figures 5 à 9 décrivent un deuxième mode de réalisation du dispositif suivant l'invention.

La figure 5 est une vue d'ensemble latérale, schématique et en coupe partielle de ce deuxième mode de réalisation monté sur l'assise 31 d'une banquette arrière de véhicule dont seule la structure métallique est représentée. La coque en tôle emboutie 32 comporte sur chacun de ses deux bords latéraux une glissière supérieure telle que 33 coulissant dans une glissière inférieure telle que 34. Ces glissières 33, 34, sont analogues aux glissières 3 et 4 de l'assise 1 de la banquette arrière représentée aux figures 1 à 4, mais seules les extrémités avant de ces glissières, connues elles-mêmes, sont indiquées.

La glissière inférieure 34 est reliée à son extrémité avant, de façon connue, par une articulation 35, d'axe transversal X7 au plancher 36 du véhicule. Un moyen de liaison détachable, non représenté, relie les glissières inférieures telles que 34 au plancher 36 en au moins un autre point. Cette liaison peut être interrompue par un moyen connu de désolidarisation, également non représenté, pour permettre le basculement vers l'avant de l'assise 31 autour de l'axe X7.

Des moyens de réglage comportant un levier de commande 37 actionné par une poignée de manoeuvre 38 permettent le déplacement longitudinal de l'assise. De façon connue et non représentée, en actionnant la poignée de manoeuvre 38 de bas en haut on provoque, le déverrouillage des glissières telles que 33, 34 l'une par rapport à l'autre, grâce à un arbre transversal 40 entraîné en rotation par le levier 37. On peut ainsi choisir, en faisant coulisser les glissières telles que 33, un point fixe parmi plusieurs non représentés, correspondant à une position longitudinale déterminée de l'assise 31 par rapport au plancher 36, point fixe au niveau duquel on peut verrouiller chacune des glissières telles que 33 par rapport aux glissières telles que 34 correspondantes.

Comme dans le cas des figures 1 à 4, à chacun de ces points de verrouillage de ces glissières telles que 33 correspond un moyen de retenue qui permet de relier le moyen de fixation 39 d'une ceinture de sécurité non représentée avec le plancher 36 sans modifier la position relative de ce moyen de fixation 39 par rapport à l'assise 31.

Dans le cas de la figure 5, trois points fixes de verrouillage sont prévus pour les glissières telles que 33 à l'intérieur de leur plage de réglage le long des glissières fixes telles que 34. A chacun de ces points fixes de verrouillage correspond un moyen de retenue 42, 43, 44. Ces trois moyens de retenue sont trois barreaux métalliques transversaux de révolution 42, 43, 44 disposés le long d'un profilé 45 fixé au plancher 36 dans son axe longitudinal. On voit, figure 5, l'utilisation du barreau 42 comme moyen de retenue.

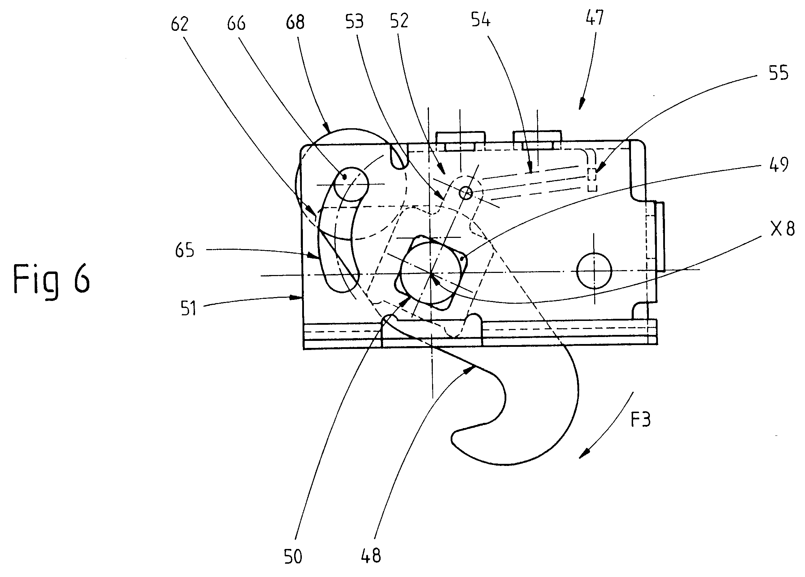

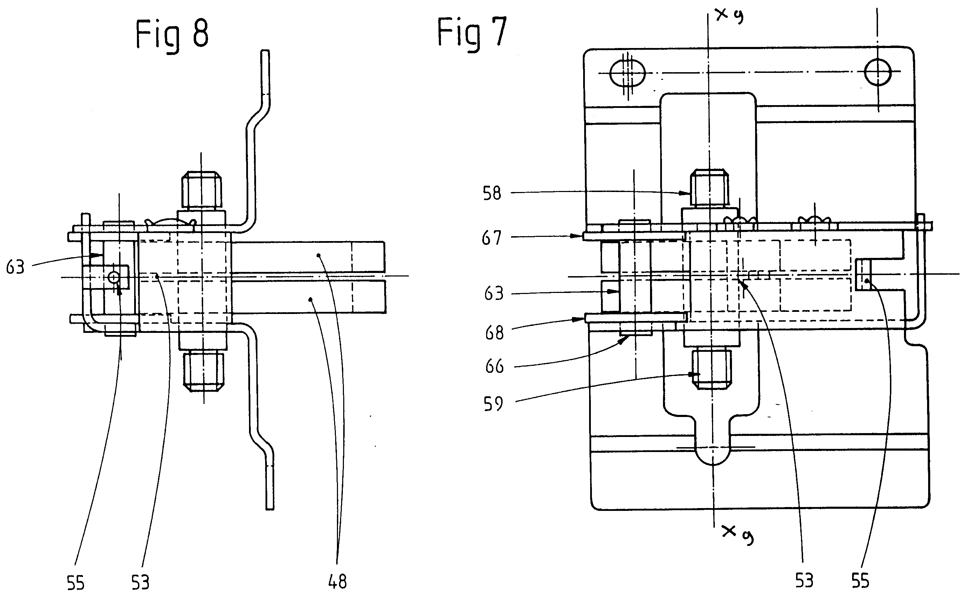

Pour cela, suivant le deuxième mode de réalisation du dispositif suivant l'invention, le moyen de fixation 39 de la ceinture de sécurité non représentée est relié par la pièce de liaison 46 à la pièce majeure 47. Celle-ci comporte au moins un crochet 48 calé en rotation avec un faible jeu grâce à un trou carré dans lequel est engagé un arbre de même section dont les portées circulaires telles que 50 reposent sur des paliers correspondants d'axe X8 ménagés dans un boîtier 51 approximativement rectangulaire. Ce boîtier 51, solidaire de l'assise 31, est sensiblement dans l'axe du véhicule au milieu de la banquette prise dans sa largeur. Suivant le mode de réalisation représenté clairement aux figures 6 à 8 un moyen de rappel élastique 52 est en liaison permanente avec le crochet 48 de la pièce majeure 47. Ce moyen de rappel élastique comporte un levier 53 dont une extrémité percée d'un trou carré est engagée avec un faible jeu sur l'arbre 49. Comme le montrent les figures 7 et 8 le crochet 48 est double et ses deux composants sont de part et d'autre du levier 53. Un ressort hélicoïdal 54 est relié d'une part à l'extrémité de ce levier éloignée de l'axe X8 et d'autre part à un point d'attache 55 solidaire du boîtier 51. Ainsi, ce ressort 54 exerce sur le crochet double 48 un couple de rappel élastique suivant la flèche F3 qui permet de rappeler, ou de maintenir en prise le crochet 48 vis-à-vis du moyen de retenue tel que le barreau 42. Comme le montrent les figures 6, 7, 8 l'arbre 49 comporte à ses deux extrémités, au delà des portées circulaires 50 des zones filetées 58, 59 permettant l'accrochage de deux moyens de fixation tels que 39, pour des ceintures de sécurité non représentées par leurs pièces de liaison correspondantes telles que 46 au moyen d'écrous. On assure une flexibilité suffisante au moyen de fixation 39 en donnant aux pièces de liaison telles que 46 une certaine liberté de déplacement angulaire autour de l'axe X8.

Pour effectuer le déverrouillage des crochets 48, l'arbre transversal 40, entraîné en rotation par le levier de commande 37, est relié en son milieu à un profilé 60 prolongé par une tige ronde 61, disposés dans un plan perpendiculaire à cet arbre, tige qui vient en appui direct ou indirect contre le crochet 48 de la pièce majeure 47 au voisinage d'un bec 62 à une extrémité sensiblement opposée à celle qui comporte la zone d'accrochage par rapport à l'axe X8.

Comme le montrent les figures 5 à 8 on intercale, de préférence, entre la tige 61 et le bord du bec 62 sur lequel il s'agit d'exercer le couple nécessaire pour provoquer la rotation du crochet 48 dans le sens du déverrouillage un moyen de couplage constitué par une pièce de couplage 63 qui permet de localiser avec précision le point d'application de la force exercée par la tige 61, et de déplacer ce point au fur et à mesure du déplacement angulaire du crochet 48. Cette pièce de couplage 63 est dans le cas représenté aux figures 5 à 8, une pièce de révolution d'axe X9 dont le guidage est assuré par des glissières telles que 65 réalisées dans les parois en regard du boîtier 51. Les deux extrémités telles que 66 de la pièce de couplage 63 sont engagées dans ces glissières et, de préférence, des rondelles 67, 68 solidaires de la pièce 63 viennent en appui glissant contre les parois intérieures du boîtier 51 et assurent un déplacement de la pièce 63 parallèlement à elle-même. Le profil des glissières est déterminé pour transmettre au crochet 48 un couple suffisant au moyen de la pièce 63 pour permettre un déverrouillage aisé en tenant compte du couple résistant opposé par le ressort 54.

On voit ainsi que la pièce majeure 47 permet suivant un deuxième mode de réalisation du dispositif suivant l'invention de relier au plancher 36 d'un véhicule des ceintures de sécurité correspondant à deux emplacements formant siège d'une banquette arrière, un passage étant ménagé à travers cette banquet te en son milieu pour permettre de relier des moyens de fixation tel que 39 à cette pièce majeure et, par son intermédiaire, à un moyen de retenue 42, 43, 44 choisi parmi plusieurs fixés au plancher 36.

De façon connue, la poignée de manoeuvre 38 du levier 37 ne peut se rabattre de haut en bas que lorsque les glissières telles que 33 se trouvent au niveau d'un point fixe permettant leur verrouillage par rapport aux glissières telles que 34 correspondantes.

Lorsque la poignée de manoeuvre 38 se rabat, la tige ronde 61 cesse d'exercer sa pression sur la pièce de couplage 63 et le moyen de rappel élastique 52 provoque le verrouillage du crochet 48 sur le moyen de retenue correspondant.

Comme dans le cas du premier mode de réalisation du dispositif suivant l'invention, on peut désolidariser les glissières inférieures telles que 34 d'avec le plancher 36 si elles comportent effectivement une telle liaison en agissant, de façon connue et non représentée, sur un moyen de désolidarisation. Il est alors possible de basculer vers l'avant l'assise 31 autour de l'axe X7, ceci après avoir déverrouillé le crochet 48 de son moyen de retenue 42 en exerçant une poussée de haut en bas sur l'extrémité arrière 69 de la tige 61. De préférence, on rabat au préalable le dossier de cette banquette de façon connue, sur celle-ci avant basculement de l'assise.

De façon avantageuse, on munit les glissières telles que 34 de moyens d'auto-verrouillage au plancher 36 en eux-mêmes connus qui permettent d'assurer automatiquement ce verrouillage dès que l'assise est ramenée à sa position horizontale par rotation autour de l'axe X7.

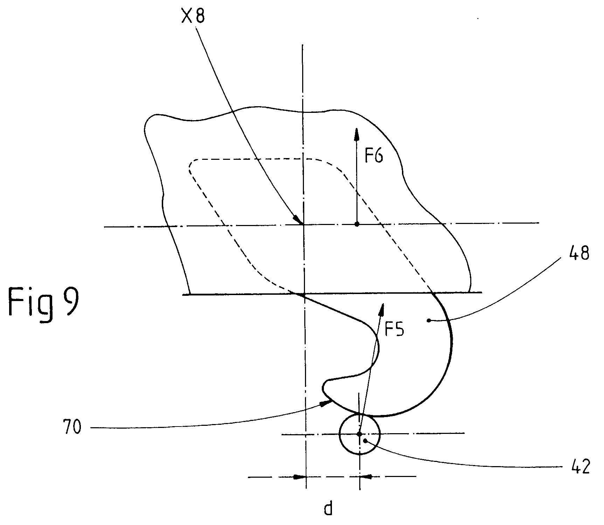

De plus, on munit la pièce majeure 47 d'un moyen d'auto-verrouillage qui lui permet de venir s'accrocher automatiquement au moyen de retenue avec lequel elle était en prise avant basculement vers l'avant de l'assise 31. Comme le montre plus particulièrement la figure 9 ce moyen d auto-verrouillage comprend une disposition particulière du crochet 48 et du moyen de retenue tel que 42 ainsi qu'un profil particulier donné au bord extérieur 70 de ce crochet dans la zone où il entre en contact avec le moyen de retenue au moment du retour de l'assise à l'horizontale le crochet étant en position fermée.

Cette disposition particulière et ce profil sont déterminés de façon que la direction de la force F5 exercée par la paroi de révolution du moyen de retenue 42 contre le bord extérieur 70 du crochet 48 soit telle que cette force exerce sur le crochet 48 par rapport à son axe X8 un couple dont le moment est suffisant pour le faire tourner dans le sens de l'ouverture malgré la force de rappel exercée par le moyen de rappel élastique 52. Ce moment est fonction de la composante verticale F6 de la force F5 et de la distance "d" en projection sur un plan horizontal entre l'axe X8 et l'axe du barreau 42.

## Revendications

1. Dispositif permettant de relier au plancher d'un véhicule automobile un moyen de fixation (7,39) d'au moins une ceinture de sécurité utilisée pour maintenir un utilisateur d'un siège réglable longitudinalement de ce véhicule dont l'assise (1,31) est portée afin de pouvoir prendre le long d'un axe longitudinal une position fixe choisie parmi plusieurs, et où ce dispositif comprend une pièce majeure (15,49) à laquelle est relié de façon flexible le moyen de fixation (7,39) et qui est liée directement ou indirectement à l'assise (1,31) et qui comporte un crochet (14,48) qui est articulé sur un axe transversal (X4) et qui est capable de coopérer avec un moyen de retenue (8,9,10,11,42,43,44) choisi parmi plusieurs d'une série longitudinale ainsi qu'un moyen de commande (19,37) permettant d'agir directement ou indirectement sur la pièce majeure (15,49) pour la libérer de ce moyen de retenue (8,9,10,11,42,43,44) ou au contraire la verrouiller à celui-ci au niveau de chaque position fixe longitudinale de l'assise (1,31) définie par un tel moyen de retenue (8,9,10,11,42,43,44) caractérisé en ce que le siège est un siège basculable,
en ce que le siège est porté par au moins une glissière supérieure (3,33) apte à coulisser longitudinalement relativement à au moins une glissière inférieure (4,34) portée par le plancher (36), en ce que cette glissière inférieure (4,34) est articulée autour d'un axe transversal (X1,X7) sur le plancher (36)
et en ce que les moyens de retenue (8,9,10,11,42,43,44) sont des barreaux transversaux fixés au plancher (36) du véhicule.

2. Dispositif suivant revendication 1 caractérisé en ce que la pièce majeure (13) comporte un crochet (14), cette pièce majeure (13) étant articulée en rotation (X4) à l'extrémité d'un bras (16), lui-même articulé en rotation (X2) par rapport à l'assise (1), les deux axes (X4, X2) de ces articulations étant transversaux et un moyen de commande (19) permettant de faire tourner le bras (16) autour de son axe d'articulation (X2) relié à l'assise (1) de façon que lorsque l'assise (1) se trouve dans une position fixe longitudinale de verrouillage vis-à-vis d'un moyen de retenue (8, 9, 10, 11) au moins un bord (14B) du crochet (14) vient au contact de ce moyen de retenue et coopère avec lui en provoquant une rotation de la pièce majeure (13) qui assure l'accrochage de ce crochet (14) sur ce moyen de retenue.

3. Dispositif suivant revendication 1 ou 2 caractérisé en ce que, lorsque l'assise (1) se trouve dans une position fixe longitudinale de verrouillage vis-à-vis d'un moyen de retenue (8, 9, 10, 11), celui-ci est placé à une distance de l'axe d'articulation (X2) du bras (16) sur l'assise (1), inférieure à la distance radiale qui sépare l'axe (X4) d'articulation de la pièce majeure (13), à l'extrémité du bras (16), de l'axe (X2) d'articulation de celui-ci sur l'assise (1), afin de permettre, par poussée de ce moyen de retenue (8, 9, 10, 11) sur le bord supérieur (14B) d'entrée du crochet (14) la rotation de la pièce majeure (13) dans le sens permettant l'engagement de ce moyen de retenue dans le crochet.

4. Dispositif suivant revendication 3 caractérisé en ce que le moyen de fixation de la ceinture est relié de façon flexible à la pièce majeure (13) en un point (X3) situé à une distance de l'axe d'articulation (X2) du bras (16) sur l'assise (1), lorsque la ceinture est en tension, inférieure à la distance radiale (R) entre l'articulation de la pièce majeure (13) à l'extrémité du bras et l'articulation de celui-ci sur l'assise afin de maintenir le crochet (14) en position d'accrochage.

5. Dispositif suivant revendication 3 ou 4 caractérisé en ce que la zone d'entrée du crochet (14) présente un bord inférieur (14A) contre lequel le moyen de retenue, préalablement engagée dans le crochet, vient en appui, lorsqu'on exerce sur la pièce majeure (13) au moyen du bras (16) une poussée de bas en haut, le couple ainsi réalisé provoquant la rotation de la pièce majeure dans un sens opposé à celui ayant permis l'engagement du moyen de retenue dans le crochet, et permettant donc de dégager ce moyen de retenue du crochet.

6. Dispositif suivant l'une des revendications 2 à 5 caractérisé en ce que le bras (16) est commandé par un levier (19) articulé autour d'un axe transversal (X6) dont une extrémité comporte une poignée (22) au voisinage de l'avant de l'assise (1), l'autre extrémité étant reliée à un prolongement du bras (16), au-delà de son axe d'articulation (X2) de façon à provoquer l'engagement dans le crochet (14) ou, au contraire, le dégagement du moyen de retenue (8, 9, 10, 11) qui correspond à la position longitudinale fixe choisie pour l'assise (1) du siège.

7. Dispositif suivant revendication 6 caractérisé en ce que le levier de commande du bras permet aussi d'effectuer le verrouillage ou le déverrouillage de l'assise (1) du siège pour pouvoir la déplacer d'une position fixe à l'autre suivant un axe longitudinal.

8. Dispositif suivant l'une des revendications 2 à 7 caractérisé en ce qu'un moyen de déverrouillage des composants des glissières (4) de l'assise (1) d'un emplacement formant siège d'une banquette arrière, fixes par rapport au plancher (6) du véhicule, permet de désolidariser de ce plancher l'ensemble de l'assise de la banquette arrière et de faire tourner cette assise autour d'une articulation transversale avant (X1), l'élévation de la partie arrière de l'assise provoquant ainsi la rotation de la pièce majeure (13) et le dégagement du moyen de retenue (9) par rapport au crochet (14) et en ce que le retour de l'assise (1) à sa position initiale permet à nouveau la rotation de la pièce majeure (13) en sens inverse et l'engagement du moyen de retenue (9) dans le crochet (14).

9. Dispositif suivant l'une des revendications 2 à 8 caractérisé en ce que des moyens élastiques et/ou de guidage participent à la rotation de la pièce majeure (13) dans le sens correspondant au dégagement ou à l'engagement du moyen de retenue (9) par rapport au crochet (14).

10. Dispositif suivant revendication 1 caractérisé en ce que la pièce majeure (47) comporte au moins un crochet (48) monté en rotation autour d'un axe (X8) fixe par rapport à l'assise (31), lequel crochet (48), sous l'action d'un moyen de commande (37) exerçant un couple, est apte à coopérer avec un moyen de retenue, choisi parmi plusieurs (42, 43, 44) situés à des positions fixes au plancher du véhicule, suivant un axe longitudinal, afin d'assurer le verrouillage ou la libération de la pièce majeure (47) par rapport à ce moyen de retenue (42, 43, 44).

11. Dispositif suivant revendication 10 caractérisé en ce qu'un moyen de rappel élastique (52) est monté de façon à exercer, sur au moins un crochet (48), un couple en sens opposé à celui exercé par l'intermédiaire du moyen de commande.

12. Dispositif suivant revendication 10 ou 11 caractérisé en ce qu'au moins un crochet (48) est percé d'un trou carré dans lequel est engagé un arbre de section carrée (49) avec un faible jeu, arbre comportant des portées de section circulaire (50) montées en rotation dans des paliers d'axe (X8) solidaires de l'assise (31) et en ce que le moyen de rappel élastique (52) comporte un levier (53) dont une extrémité percée d'un trou carré est engagée sur l'arbre (49) porte-crochet (48), l'autre extrémité étant reliée au ressort (54).

13. Dispositif suivant revendication 12 caractérisé en ce que les paliers, à l'intérieur desquels sont montées en rotation autour de l'axe (X8) les portées (50) de l'arbre (49) sur lequel est engagé au moins un crochet (48) et un levier (53) actionné par le ressort (54), sont solidaires d'un boîtier de forme sensiblement parallélépipédique, boîtier solidaire de l'assise (31) comportant un point d'attache (55) de l'extrémité du ressort hélicoïdal (54) éloignée du levier (53).

14. Dispositif suivant l'une des revendications 10 à 13 caractérisé en ce que le moyen de commande comprend un levier de commande (37) qui entraîne une tige (61) qui vient en appui contre le crochet (48) dans une zone (62) située au voisinage d'une extrémité sensiblement opposée à celle qui comporte la zone d'accrochage par rapport à l'axe (X8), la poussée exercée par la tige étant orientée de façon à soumettre le crochet (48) à un couple de déverrouillage par rapport au moyen de retenue (42, 43, 44) qui coopère avec lui.

15. Dispositif suivant revendication 14 caractrérisé en ce qu'un moyen de couplage (63) est disposé entre la tige (61) et le crochet (48) afin d'appliquer la poussée exercée par la tige en une zone déterminée du crochet, zone qui se déplace au fur et à mesure de la rotation du crochet (48) autour de l'axe (X8).

16. Dispositif suivant revendication 15 caractérisé en ce que le moyen de couplage (63) est une pièce de révolution d'axe (X9) parallèle à (X8) dont les extrémités (66) sont engagées dans des glissières (65), orientées de façon à guider le déplacement de cette pièce de révolution soumise à la poussée de la tige (61) au fur et à mesure de la rotation du crochet (48).

17. Dispositif suivant revendication 16 caractérisé en ce que les glissières (65) sont réalisées dans les parois en regard du boîtier (51) et en ce que la pièce de révolution (63) a une forme de bobine dont les joues sont constitués par des rondelles (67, 68), de relativement fort diamètre par rapport au diamètre des extrémités telles que (66) qui viennent en appui glissant contre les parois en regard du boîtier (51) et maintiennent le parallèlisme de l'axe (X9) par rapport a l'axe (X8) du crochet (48).

18. Dispositif suivant l'une des revendications 10 à 17 caractérisé en ce que le moyen de commande (37) qui permet d'assurer le verrouillage ou la libération de la pièce majeure (47) par rapport à un moyen de retenue (42, 43, 44) solidaire du plancher du véhicule, permet de provoquer simultanément le verrouillage ou le déverrouillage des unes par rapport aux autres des glissières telles que (33) solidaires de l'assise (31) vis-à-vis des glissières telles que (34) solidaires du plancher (36) du véhicule pour des positions longitudinales fixes de l'assise (31) correspondant précisement à des points pour lesquels au moins un crochet (48) d'une pièce majeure (47) est apte à coopérer avec un moyen de retenue (42, 43, 44).

19. Dispositif suivant l'une des revendications 10 à 18 caractérisé en ce qu'un moyen de déverrouillage des glissières inférieures telles que (34) d'avec le plancher (36) du véhicule permet de basculer vers l'avant l'assise (31) du véhicule autour de l'axe (X7) après avoir déverrouillé au moins un crochet (48) d'une pièce majeure (47) d'avec un moyen de retenue (42, 43, 44).

20. Dispositif suivant revendication 19 caractérisé en ce que, lorsque après basculement de l'assise (31) vers l'avant on ramène l'assise à la position longitudinale, un moyen d'autoverrouillage permet de solidariser à nouveau les glissières telles que (34) avec le plancher (36) du véhicule.

21. Dispositif suivant revendication 19 ou 20 caractérisé en ce que, lorsqu'après basculement de l'assise (31) vers l'avant on ramène l'assise à la position horizontale, un moyen d'auto-verrouillage permet à la pièce majeure (47) de venir s'accrocher automatiquement par au moins un crochet (48) au moyen de retenue (42, 43, 44) avec lequel il était initialement en prise.

22. Dispositif suivant renvendication 21 caractérisé en ce que le moyen d'auto-verrouillage est constitué par un profil particulier donné au bord extérieur (70) d'au moins un crochet (48) dans la zone où il entre en contact avec le moyen de retenue (42, 43, 44) à l'instant du retour de l'assise (31) à la position horizontale, ce profil de ce bord extérieur (70) étant tel que la force exercée par la paroi du moyen de retenue sur ce bord extérieur comporte une composante exerçant sur le crochet (48) un couple dont le moment soit suffisant pour le faire tourner dans le sens de l'ouverture malgré la force de rappel exercée par le moyen de rappel élastique (52).

23. Dispositif suivant l'une des revendications 10 à 22 caractérisé en ce que le moyen de retenue (42, 43, 44) est un barreau transversal de révolution.

24. Dispositif suivant l'une des revendications 1 à 23 caractérisé en ce qu'il permet de relier au plancher d'un véhicule automobile au moins une ceinture de sécurité montée sur des emplacements formant sièges d'une banquette arrière par l'intermédiaire d'au moins un moyen de fixation.

25. Dispositif suivant revendication 24 caractérisé en ce qu'à chaque ceinture de sécurité correspond un moyen de fixation, relié de façon flexible à une pièce majeure par un passage ménagé à travers l'assise de la banquette, dont le crochet coopère avec un moyen de retenue fixé au plancher.

## Claims

1. Device for connecting, to the floor of a motor vehicle, fixing means (7,39) for at least one safety belt used to secure the user of a longitudinally adjustable seat in this vehicle, the seat (1,31) of which is supported so as to be able to adopt one fixed position selected from several along a longitudinal axis, wherein this device comprises a major component (15,49) to which the fixing means (7,39) are flexibly attached and which is connected directly or indirectly to the seat (1,31) and which comprises a hook (14,48) articulating on a transverse axis (X4) which is capable of cooperating with retaining means (8, 9, 10, 11, 42, 43, 44) selected from several in a longitudinal series as well as control means (19,37) for acting directly or indirectly on the major component (15,49) to release it from the retaining means (8, 9, 10, 11, 42, 43, 44) or, by contrast, to bolt it to the latter in each longitudinal fixed position of the seat (1,31) defined by such retaining means (8, 9, 10, 11, 42, 43, 44), characterised in that the seat is a tiltable seat, in that the seat is carried by at least one upper slide (3,33) adapted to slide longitudinally relative to at least one lower slide (4,34) supported by the floor (36), in that this lower slide (4,34) articulates about a transverse axis (X1,X7) on the floor (36) and in that the retaining means (8, 9, 10, 11, 42, 43, 44) are transverse bars fixed to the floor (36) of the vehicle.

2. Device according to claim 1, characterised in that the major component (13) comprises a book (14), this major component (13) being rotationally articulated (X4) on the end of an arm (16) which itself is rotationally articulated (X2) relative to the seat (1), the two axes (X4,X2) of these articulations being transverse and control means (19) making it possible to rotate the arm (16) about its articulation axis (X2) connected to the seat (1) in such a way that, when the seat (1) is in a fixed longitudinal locking position relative to retaining means (8, 9, 10, 11), at least one edge (14B) of the hook (14) comes into contact with these retaining means and cooperates therewith, causing rotation of the major component (13) which ensures that this hook (14) is engaged on said retaining means.

3. Device according to claim 1 or 2, characterised in that, when the seat (1) is in a fixed longitudinal locking position relative to retaining means (8, 9, 10, 11), the latter are situated at a distance from the articulation axis (X2) of the arm (16) on the seat (1), which is less than the radial distance separating the articulation axis (X4) of the major component (13), at the end of the arm (16), from the articulation axis (X2) of the latter on the seat (1), so as to allow rotation of the major component (13) in the direction which permits engagement of said retaining means in the hook, by pushing the retaining means (8, 9, 10, 11) onto the upper entry edge (14B) of the hook (14).

4. Device according to claim 3, characterised in that the fixing means for the belt are flexibly connected to the major component (13) at a point (X3) situated at a spacing from the articulation axis (X2) of the arm (16) on the seat (1), when the belt is under tension, which is less than the radial distance (R) between the articulation of the major component (13) at the end of the arm and the articulation thereof on the seat in order to hold the hook (14) in the position of engagement.

5. Device according to claim 3 or 4, characterised in that the entry zone of the hook (14) has a lower edge (14A) against which the retaining means, previously engaged in the hook, come to abut, when downward thrust is exerted on the major component (13) by means of the arm (16), the couple thus produced causing rotation of the major component in the opposite direction to that which has allowed the retaining means to engage in the hook, thereby releasing said retaining means from the hook.

6. Device according to one of claims 2 to 5, characterised in that the arm (16) is controlled by a lever (19) articulated about a transverse axis (X6), one end of which has a handle (22) in the vicinity of the front of the seat (1), the other end being connected to an extension of the arm (16), beyond its articulation axis (X2), so as to cause engagement in the hook (14) or, on the other hand, release of the retaining means (8, 9, 10, 11) which corresponds to the fixed longitudinal position selected for the seat portion (1) of the seat as a whole.

7. Device according to claim 6, characterised in that the control lever of the arm also makes it possible to carry out locking or unlocking of the seat (1) in order to move it from one fixed position to another along a longitudinal axis.

8. Device according to one of claims 2 to 7, characterised in that means for unlocking the components of the slides (4) of the seat (1) from a position which forms the site of a rear bench seat, these components being fixed relative to the floor (6) of the vehicle, makes it possible to detach the entire rear seat from the floor and rotate this seat about a transverse front articulation (X1), the raising of the rear part of the seat thus causing rotation of the major component (13) and release of the retaining means (9) relative to the hook (14), and in that the return of the seat (1) to its original position allows the major component (13) to rotate back in the opposite direction and the retaining means (9) to engage in the hook (14).

9. Device according to one of claims 2 to 8, characterised in that elastic and/or guide means participate in the rotation of the major component (13) in the direction corresponding to the release or engagement of the retaining means (9) relative to the hook (14).

10. Device according to claim 1, characterised in that the major component (47) comprises at least one hook (48) rotatably mounted about an axis (X8) which is fixed relative to the seat (31), said hook (48), under the action of control means (37) exerting a couple, being adapted to cooperate with retaining means selected from a plurality thereof (42, 43, 44) located in fixed positions on the floor of the vehicle, along a longitudinal axis, in order to ensure the locking or release of the major component (47) relative to said retaining means (42, 43, 44).

11. Device according to claim 10, characterised in that elastic return means (52) are mounted so as to exert a couple, on at least hook (48), in the opposite direction to that exerted via the control means.

12. Device according to claim 10 or 11, characterised in that at least one hook (48) is drilled with a square hole in which engages a shaft of square cross-section (49) with slight play, this shaft having bearing surfaces of circular cross-section (50) rotatably mounted in bearings of axis (X8) which are integral with the seat (31) and in that the elastic return means (52) comprises a lever (53) one end of which, drilled with a square hole, engages on the shaft (49) carrying the hook (48), the other end being connected to the spring (54).

13. Device according to claim 12, characterised in that the bearings, inside which are rotatably mounted, about the axis (X8), the bearing surfaces (50) of the shaft (49) on which engages at least one hook (48) and a lever (53) actuated by the spring (54), are integral with a substantially parallelepipedonal casing which is attached to the seat (31), comprising an attachment point (55) for the end of the helical spring (54) remote from the lever (53).

14. Device according to one of claims 10 to 13, characterised in that the control means comprise a control lever (37) which actuates a rod (61) which abuts on the hook (48) in a zone (62) in the vicinity of one end substantially opposite to that which comprises the attachment zone relative to the axis (X8), the thrust exerted by the rod being directed so as to subject the hook (48) to a release couple relative to the retaining means (42, 43, 44) cooperating therewith.

15. Device according to claim 14, characterised in that a coupling means (63) is provided between the rod (61) and the hook (48) so as to apply the thrust exerted by the rod in a specified zone of the hook, this zone moving as the hook (48) rotates about the axis (X8).

16. Device according to claim 15, characterised in that the coupling means (63) consist of a body of revolution of the axis (X9) parallel to (X8) the ends (66) of which engage in slides (65), directed so as to guide the movement of this body of revolution subjected to the thrust of the rod (61) as the hook (48) rotates.

17. Device according to claim 16, characterised in that the slides (65) are formed in the walls facing the casing (51) and in that the body of revolution (63) is in the form of a bobbin the cheeks of which consist of washers (67, 68), relatively large in diameter compared with the diameter of the ends such as (66) which are in sliding abutment on the walls facing the casing (51) and maintain the parallel position of the axis (X9) relative to the axis (X8) of the hook (48).

18. Device according to one of claims 10 to 17, characterised in that the control means (31) which ensure locking or release of the major component (47) relative to retaining means (42, 43, 44) integral with the floor of the vehicle also makes it possible, simultaneously, to lock or unlock some of the slides relative to other slides such as (33) integral with the seat (31) relative to slides such as (34) integral with the floor (36) of the vehicle for fixed longitudinal positions of the seat (31) corresponding precisely to points for which at least one hook (48) of a major component (47) is adapted to cooperate with retaining means (42, 43, 44).

19. Device according to one of claims 10 to 18, characterised in that means for unlocking the lower slides such as (34) from the floor (36) of the vehicle enable the seat (31) of the vehicle to tilt forwards about the axis (X7) after at least one hook (48) on a major component (47) has been released from engagement with retaining means (42, 43, 44).

20. Device according to claim 19, characterised in that when the seat is returned to the longitudinal position after the seat (31) has been tipped forwards, automatic locking means enable the slides such as (34) to reengage with the floor (36) of the vehicle.

21. Device according to claim 19 or 20, characterised in that when the seat (31) is returned to its horizontal position after having been tipped forwards, automatic locking means enable the major component (47) to engage automatically, by at least one hook (48), with the retaining means (42, 43, 44) with which it originally engaged.

22. Device according to claim 21, characterised in that the automatic locking means consist of a particular profile given to the outer edge (70) of at least one hook (48) in the zone where it comes into contact with the retaining means (42, 43, 44) at the moment when the seat (31) is returned to the horizontal position, this profile of this outer edge (70) being such that the force exerted by the walls of the retaining means on this outer edge has a component which exerts a couple on the hook (48), the moment of which is sufficient to cause it to rotate in the direction of opening, in spite of the return force exerted by the elastic return means (52).

23. Device according to one of claims 10 to 22, characterised in that the retaining means (42, 43, 44) consist of a transverse rotational bar.

24. Device according to one of claims 1 to 23, characterised in that it enables at least one safety belt mounted on locations which form the seats of a rear bench seat, to be connected to the floor of a motor vehicle by means of at least one fixing means.

25. Device according to claim 24, characterised in that each safety belt has a corresponding fixing means flexibly connected to a major component via a passage formed through the seat area of the bench seat, the hook of which cooperates with retaining means fixed to the floor.

## Patentansprüche

1. Vorrichtung, die es gestattet, am Boden eines Kraftfahrzeugs eine Verankerung (7, 39) für wenigstens einen Sicherheitsgurt zu befestigen, der zur Sicherung eines Benutzers eines langsverstellbaren Sitzes des Fahrzeugs dient, dessen Sitzteil (1, 31) so abgestutzt ist, daß es längs einer Längsachse eine unter mehreren Positionen ausgewählte feste Position einnehmen kann, wobei diese Vorrichtung ein Hauptteil (15, 49) aufweist, an dem die Verankerung (7, 39) flexibel befestigt ist und das direkt oder indirekt mit dem Sitzteil (1, 31) verbunden ist und einen Haken (14, 48) aufweist, der um eine Querachse (X4) schwenkbar ist und zusammenwirkt mit einem Haltemittel (8, 9, 10, 11, 42, 43, 44), das unter mehreren aus einer Folge von in Längsrichtung angeordneten Haltemitteln ausgewählt ist, sowie mit einem Betätigungsmittel (19, 37), das direkt oder indirekt auf das Hauptteil (15, 49) wirkt, um es von dem Haltemittel (8, 9, 10, 11, 42, 43, 44) zu befreien oder es in Höhe jeder festen Längsposition des Sitzteils (1, 31), die durch ein solches Haltemittel (8, 9, 10, 11, 42, 43, 44) definiert ist, an diesem zu verriegeln, dadurch gekennzeichnet, daß der Sitz ein umklappbarer Sitz ist,
daß dieser Sitz durch wenigstens eine obere Laufschiene (3, 33) gehalten ist, die in Längsrichtung relativ zu wenigstens einer auf dem Boden (36) gehaltenen unteren Laufschiene (4, 34) gleitet, daß diese untere Laufschiene (4, 34) auf dem Boden (36) um eine Querachse (X1, X7) schwenkbar ist
und daß die Haltemittel (6, 9, 10, 11, 42, 43, 44) am Boden (36) des Fahrzeugs befestigte Querstäbe sind.

2. Vorrichtung nach Anspruch 1, dadurch gekennzeichnet, daß das Hauptteil (13) einen Haken (14) aufweist, dieses Hauptteil (13) schwenkbar (X4) am Ende eines Armes (16) befestigt ist, der seinerseits in bezug auf das Sitzteil (1) schwenkbar ist (X2), wobei die beiden Schwenkachsen (X4, X2) quer verlaufen und ein Betätigungsmittel (19) es gestattet, den Arm (16) derart um seine mit dem Sitzteil (1) verbundene Schwenkachse (X2) zu schwenken, daß, wenn das Sitzteil (1) sich in Längsrichtung in einer festen Verriegelungsposition gegenüberliegend zu einem Haltemittel (8, 9, 10, 11) befindet, wenigstens ein Rand (14B) des Hakens (14) mit diesem Haltemittel in Berührung kommt und damit zusammenwirkt, indem es eine Drehung des Hauptteils (13) bewirkt, die das Einhaken des Hakens (14) an dem Haltemittel sicherstellt.

3. Vorrichtung nach Anspruch 1 oder 2, dadurch gekennzeichnet, daß, wenn sich das Sitzteil (1) in Längsrichtung in einer festen Verriegelungsposition gegenüberliegend zu einem Haltemittel (8, 9, 10) befindet, dieses in einem Abstand zu der Schwenkachse (X2) des Armes (16) an dem Sitzteil (1) liegt, der kleiner ist als der radiale Abstand, der die Schwenkachse (X4) des Hauptteils (13) am Ende des Armes (16) von der Schwenkachse (X2) desselben an dem Sitzteil (1) trennt, damit das Hauptteil (13) durch den von dem Haltemittel (8, 9, 10, 11) auf den oberen Eintrittsrand (14B) des Hakens (14) ausgeübten Druck in der Richtung geschwenkt wird, die den Eingriff des Haltemittels in den Haken gestattet.

4. Vorrichtung nach Anspruch 3, dadurch gekennzeichnet, daß die Gurtverankerung mit dem Hauptteil (13) an einem Punkt (X3) flexibel verbunden ist, der, wenn der Gurt gespannt ist, zu der Schwenkachse (X2) des Armes (16) an dem Sitzteil (1) in einem Abstand liegt, der kleiner ist als der radiale Abstand (R) zwischen der Schwenkachse des Hauptteils (13) am Ende des Armes und der Schwenkachse desselben an dem Sitzteil, um den Haken (14) in der Einhakposition zu halten.

5. Vorrichtung nach Anspruch 3 oder 4, dadurch gekennzeichnet, daß die Eintrittszone des Hakens (14) einen unteren Rand (14A) bildet, an dem das zuvor in den Haken eingeführte Haltemittel zur Anlage kommt, wenn man auf das Hauptteil (13) mit Hilfe des Armes (16) einen aufwärts gerichteten Druck ausübt, wobei das so gebildete Kräftepaar eine Drehung des Hauptteils in dem Sinn bewirkt, der dem Sinn entgegengesetzt ist, der den Eingriff des Haltemittels in den Haken ermöglicht hat, und so die Freigabe des Haltemittels aus dem Haken gestattet.

6. Vorrichtung nach einem der Ansprüche 2 bis 5, dadurch gekennzeichnet, daß der Arm (16) durch einen um eine Querachse (X6) schwenkbaren Hebel (19) betätigt wird, dessen eines Ende einen Griff (22) im vorderen Bereich des Sitzteils (1) aufweist und dessen anderes Ende mit einer Verlängerung des Armes (16) jenseits seiner Schwenkachse (X2) verbunden ist, so daß der Eingriff in den Haken (14) oder umgekehrt die Freigabe des Haltemittels (8, 9, 10, 11) bewirkt wird, das der gewählten festen Längsposition für das Sitzteil (1) des Sitzes entspricht.

7. Vorrichtung nach Anspruch 6, dadurch gekennzeichnet, daß der Betätigungshebel des Armes auch die Verriegelung oder Entriegelung des Sitzteils (1) des Sitzes ermöglicht, um den Sitz in Längsrichtung von einer festen Position in eine andere verstellen zu können.

8. Vorrichtung nach einem der Ansprüche 1 bis 7, dadurch gekennzeichnet, daß ein Mittel zur Entriegelung der Bauteile der Laufschiene (4) des Sitzteils (1) von einer in bezug auf den Boden (6) des Fahrzeugs festen Stelle, die den Sockel eines Rücksitzes bildet, es gestattet, diesen Boden und die Baugruppe des Sitzteils des Rücksitzes voneinander zu lösen und das Sitzteil um eine querverlaufende vordere Schwenkachse (X1) zu schwenken, wobei das Anheben des hinteren Teils des Sitzteils somit die Drehung des Hauptteils (13) und die Freigabe des Haltemittels (9) in bezug auf den Haken (14) bewirkt, und daß die Rückkehr des Sitzteils (1) in seine Ausgangsposition wieder die Drehung des Hauptteils (13) in Gegenrichtung und den Eingriff des Haltemittels (9) in den Haken (14) gestattet.

9. Vorrichtung nach einem der Ansprüche 2 bis 8, dadurch gekennzeichnet, daß elastische Mittel und/oder Führungsmittel an der Drehung des Hauptteils (13) in der Richtung beteiligt sind, die dem Austritt oder dem Eingriff des Haltenmittels (9) in bezug auf den Haken (14) entspricht.

10. Vorrichtung nach Anspruch 1, dadurch gekennzeichnet, daß das Hauptteil (47) wenigstens einen Haken (48) aufweist, der um eine in bezug auf das Sitzteil (31) feste Achse (X8) drehbar befestigt ist, welcher Haken (48) unter der Wirkung eines ein Drehmoment ausübenden Betätigungsmittels (37) in der Lage ist, mit einem Haltemittel zusammenzuwirken, das unter mehreren auf einer Längsachse in festen Positionen auf dem Boden des Fahrzeugs angeordneten Haltemitteln (42, 43, 44) ausgewählt ist, um die Verriegelung oder Freigabe des Hauptteils (47) in bezug auf dieses Haltemittel (42, 43, 44) zu gewährleisten.

11. Vorrichtung nach Anspruch 10, dadurch gekennzeichnet, daß ein elastisches Rückstellmittel (52) derart montiert ist, daß es auf wenigstens einen Haken (48) ein Drehmoment in dem Sinn ausübt, der dem über das Betätigungsmittel ausgeübten Drehmoment entgegengesetzt ist.

12. Vorrichtung nach Anspruch 10 oder 11, dadurch gekennzeichnet, daß wenigstens ein Haken (48) von einer rechteckigen Öffnung durchsetzt ist, in die eine Welle (49) mit rechteckigem Querschnitt mit geringem Spiel eingreift, welche Welle Bereiche (50) mit kreisförmigem Querschnitt aufweist, die drehbar in mit dem Sitzteil (31) verbundenen Achslagern (X8) montiert sind, und daß das elastische Rückstellmittel (52) einen Hebel (53) aufweist, dessen eines Ende von einer rechteckigen Öffnung durchsetzt ist und auf der den Haken (48) tragenden Welle (49) sitzt und dessen anderes Ende mit der Feder (54) verbunden ist.

13. Vorrichtung nach Anspruch 12, dadurch gekennzeichnet, daß die Lager, in denen die Bereiche (50) der Welle (49) drehbar montiert sind, die mit wenigstens einem Haken (48) und einem durch die Feder (54) betätigten Hebel (53) in Eingriff steht, an einem Gehäuse sitzen, das im wesentlichen die Form eines Parallelflachs hat und mit dem Sitzteil (31) verbunden ist und einen Befestigungspunkt (55) für das von dem Hebel (53) entfernte Ende der Schraubenfeder (54) aufweist.

14. Vorrichtung nach einem der Ansprüche 10 bis 13, dadurch gekennzeichnet, daß das Betätigungsmittel einen Betätigungshebel (37) aufweist, der eine Stange (61) betätigt, die sich gegen den Haken (48) in einer Zone (62) anlegt, die sich in der Nähe eines Endes befindet, das demjenigen, das die Verankerungszone in bezug auf die Achse (X8) aufweist, im wesentlichen entgegengesetzt ist, wobei die von der Stange ausgeübte Kraft so gerichtet ist, daß auf den Haken (48) ein Entriegelungsdrehmoment in bezug auf das damit zusammenwirkende Haltemittel (42, 43, 44) ausgeübt wird.

15. Vorrichtung nach Anspruch 14, dadurch gekennzeichnet, daß ein Kupplungsmittel (63) zwischen der Stange (61) und dem Haken (48) angeordnet ist, um die von der Stange ausgeübte Kraft auf eine bestimmte Zone des Hakens zu übertragen, die sich entsprechend der Drehung des Hakens (48) um die Achse (X8) verlagert.

16. Vorrichtung nach Anspruch 15, dadurch gekennzeichnet, daß das Kupplungsmittel (63) ein Rotationskörper mit einer zu (X8) parallelen Achse (X9) ist, dessen Enden (66) in Laufschienen (65) eingreifen, die so orientiert sind, daß sie die Bewegung dieses Rotationskörpers, der der Kraft der Stange (61) unterliegt, entsprechend der Drehung des Hakens (48) führen.

17. Vorrichtung nach Anspruch 16, dadurch gekennzeichnet, daß die Laufschienen (65) in gegenüberliegenden Wänden des Gehäuses (51) ausgebildet sind und daß der Rotationskörper (63) die Form einer Spule hat, deren Flansche durch Scheiben (67, 68) mit relativ großem Durchmesser in bezug auf den Durchmesser der Enden wie etwa (66) gebildet werden, die mit den gegenüberliegenden Wänden (51) des Gehäuses (51) in Gleitberührung kommen und die Parallelität der Achse (X9) in bezug auf die Achse (X8) des Hakens (48) aufrechterhalten.

18. Vorrichtung nach einem der Ansprüche 10 bis 17, dadurch gekennzeichnet, daß das Betätigungsmittel (37), das die Verriegelung oder Freigabe des Hauptteils (47) in bezug auf ein mit dem Boden des Fahrzeugs verbundenes Haltemittel (42, 43, 44) gewährleistet, zugleich die Verriegelung oder Entriegelung der mit dem Sitzteil (31) verbundenen Laufschienen wie etwa (33) gegenüber dem mit dem Boden (36) des Fahrzeugs verbundenen Laufschienen wie etwa (34) relativ zueinander für feste Längspositionen des Sitzteils (31) gestattet, die präzise den Punkten entsprechen, an welchen wenigstens ein Haken (48) eines Hauptteils (47) mit einem Haltemittel (42, 43, 44) zusammenwirken kann.

19. Vorrichtung nach einem der Ansprüche 10 bis 18, dadurch gekennzeichnet, daß ein Mittel zur Entriegelung der unteren Laufschienen wie etwa (34) an dem Boden (36) des Fahrzeugs es gestattet, das Sitzteil (31) des Sitzes um die Achse (X7) nach vorn zu schwenken, nachdem wenigstens ein Haken (48) eines Hauptteils (47) mit einem Haltemittel (42, 43, 44) entriegelt worden ist.

20. Vorrichtung nach Anspruch 19, dadurch gekennzeichnet, daß, wenn nach dem Schwenken des Sitzteils (31) nach vorn das Sitzteil in die Längsposition zurückgeführt wird, ein Selbstverriegelungsmittel es gestattet, die Laufschienen wie etwa (34) wieder mit dem Boden (36) des Fahrzeugs zu verbinden.

21. Vorrichtung nach Anspruch 19 oder 20, dadurch gekennzeichnet, daß, wenn nach dem Schwenken des Sitzteils (31) nach vorn das Sitzteil in seine waagerechte Position zurückgeführt wird, ein Selbstverriegelungsmittel es dem Hauptteil (47) ermöglicht, sich automatisch mit wenigstens einem Haken (48) an dem Haltemittel (42, 43, 44) einzuhaken, mit dem es ursprünglich in Eingriff war.

22. Vorrichtung nach Anspruch 21, dadurch gekennzeichnet, daß das Selbstverriegelungsmittel gebildet wird durch ein spezielles Profil des äußeren Randes (70) wenigstens eines Hakens (48) in der Zone, in der er beim Rückstellen des Sitzteils (31) in die waagerechte Position mit dem Haltemittel (42, 43, 44) in Berührung kommt, wobei dieses Profil des äußeren Randes (70) so beschaffen ist, daß die von der Wand des Haltemittels auf diesen äußeren Rand ausgeübte Kraft eine Komponente aufweist, die auf den Haken (48) ein ausreichendes Drehmoment ausübt, um ihn trotz der von dem elastischen Rückstellmittel (52) ausgeübten Rückstellkraft in Öffnungsrichtung zu schwenken.

23. Vorrichtung nach einem der Ansprüche 10 bis 22, dadurch gekennzeichnet, daß das Haltemittel (42, 43, 44) ein als Rotationskörper ausgebildeter querverlaufender Stab ist.

24. Vorrichtung nach einem der Ansprüche 1 bis 23, dadurch gekennzeichnet, daß sie es gestattet, mit dem Boden eines Kraftfahrzeugs wenigstens einen Sicherheitsgurt zu verbinden, der mit Hilfe wenigstens einer Verankerung an Stellen angebracht ist, die Sockel für einen Rücksitz bilden.

25. Vorrichtung nach Anspruch 24, dadurch gekennzeichnet, daß jedem Sicherheitsgurt eine Verankerung entspricht, die durch einen durch den Sitzteil des Sitzes verlaufenden Durchlaß hindurch flexibel mit einem Hauptteil verbunden ist, dessen Haken mit einem bodenfesten Haltemittel zusammenwirkt.
